# FASCICULE DE BREVET EUROPEEN

(11) **EP 1 849 388 B1**
(45) Date de publication et mention de la délivrance du brevet: **14.09.2016**
(21) Numéro de dépôt: 06368009.4
(22) Date de dépôt: 28.04.2006
(51) Int. Cl.: A47J 37/07

(54) **Dispositif de grill perfectionné**
Verbessertes Grill-Gerät
Improved barbecue arrangement

(43) Date de publication de la demande: 31.10.2007
(73) Titulaire: Poiret, Jérôme, 06270 Villeneuve-Loubet (FR)
(72) Inventeur: Poiret, Jérôme, 06270 Villeneuve-Loubet (FR)
(74) Mandataire: Schuffenecker, Thierry

(56) Documents cités:
- EP-A- 0 353 642

## Description

### Domaine technique de l'invention

La présente invention concerne le domaine des ensembles de cuisson et notamment un dispositif de gril, fixe ou amovible.

### Etat de la technique

L'on connaît un grand nombre de dispositifs de grills permettant de réaliser la cuisson des aliments de manière naturelle et conviviale, que l'on désigne communément sous l'appellation barbecue.

Les dispositifs connus présentent l'inconvénient d'une manipulation malaisée des aliments à cuire et notamment lorsqu'il faut les retourner sur le foyer. Il n'est pas rare que le convive qui est commis au grill se brûle ou gâche partiellement les aliments à cuire.

Le brevet EP0353642 décrit un appareil de cuisson comportant un ensemble de deux grilles articulées au moyen d'un mécanisme de pivotement.

La présente invention a pour but de remédier à ces inconvénients.

### Exposé de l'invention

La présente invention a pour but de proposer un dispositif de cuisson de type grill facile à réaliser et permettant une manipulation aisée des aliments à cuire.

Un autre but de la présente invention consiste à proposer un dispositif de cuisson susceptible d'être facilement adapté à tout barbecue existant.

L'invention réalise ces buts au moyen d'un dispositif de cuisson de type grill comportant un cadre doté de deux glissières latérales et une structure de grill comportant une première et une seconde grilles articulées entre elles de manière à constituer un compartiment de cuisson. La structure de grill comporte deux barres ou plaques latérales dotée chacune :
- d'un tenon destiné à venir coulisser dans l'une des deux glissières ;
- d'un point d'articulation recevant l'extrémité d'un bras pouvant tourner autour d'un pivot fixe situé à une extrémité de la glissière. De ce fait, les grilles deviennent facilement réversibles par rapport au cadre qu'il suffit de placer sur les braises pour obtenir la cuisson des aliments. Braises ou tout autre élément de chauffe: gaz, salamandre électrique, pierres de lave, infrarouge, corps de chauffe, etc....

Dans un mode de réalisation particulier, les première et seconde grilles sont articulées au moyen d'un chaînon, d'un anneau ou d'une charnière.

De préférence, la structure de grille est dotée d'un mécanisme de fermeture pour les premières et secondes grilles évitant la chute des aliments dans le foyer lors de la manipulation des grilles.

Dans un mode de réalisation le cadre comporte des pieds réglables et est démontable par rapport au corps de chauffe permettant la cuisson des aliments.

Dans un mode de réalisation spécifique, le cadre est doté d'éléments de fixation à une structure de barbecue pré-existante.

### Description des dessins

D'autres caractéristiques, but et avantages de l'invention apparaîtront à la lecture de la description et des dessins ci-après, donnés uniquement à titre d'exemples non limitatifs. Sur les dessins annexés :
La figure 1 illustre une structure de grille conforme à la présente invention.
La figure 2 représente la structure de la figure 1, coopérant avec un cadre 100 assurant la fonction de réversibilité de la grille.
Les figures 3 et 4 illustrent une réalisation amovible du cadre 100.
La figure 5 illustre un exemple de réalisation d'un corps de chauffe adapté à recevoir le cadre 100.
La figure 6 illustre une structure duale du cadre 100 destiné à recevoir deux ensembles de grilles 1,2 et 1', 2'.
La figure 7 illustre un mode de réalisation de la glissière 13 permettant le blocage de la grille.

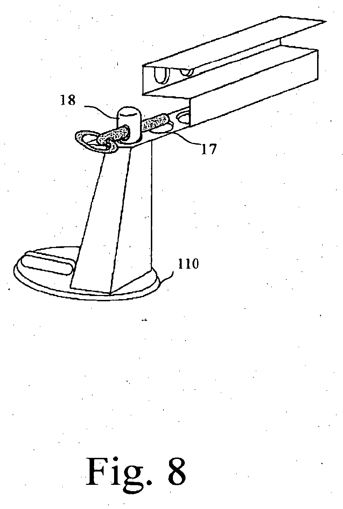

La figure 8 illustre une structure ajustable du cadre 100.
Les figures 9, 10, 11 et 12 présentent deux autres profils envisageables pour réaliser la glissière 13, à savoir en « S », « U » et en « H ».

### Description d'un mode de réalisation préféré

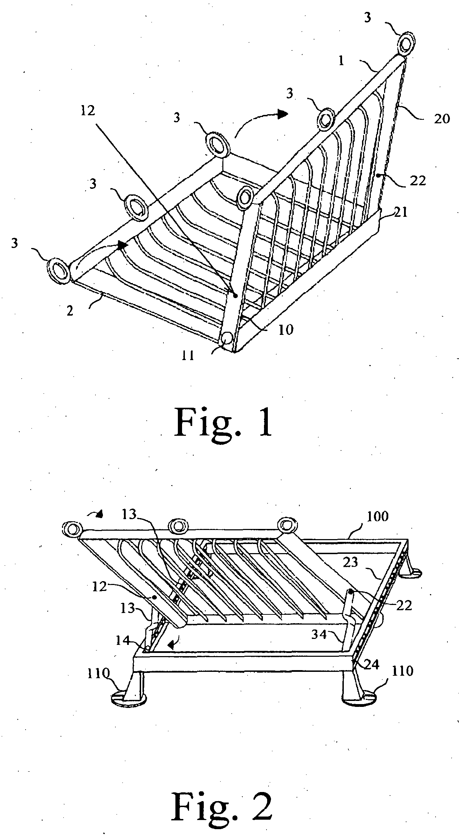

La figure 1 illustre un dispositif de cuisson conforme à la présente invention, laquelle se compose d'une première grille de cuisson 1 disposant de deux plaques ou barres latérales 10 et 20 destinées à former une structure rigide.

Outre la première grille 1, l'élément comporte une seconde grille de cuisson 2 articulée par rapport à la première de manière à délimiter, une fois en position « fermée » un compartiment de cuisson pour les aliments à cuire. Il est à noter que l'articulation des deux grilles 1 et 2 peut être réalisée de multiples manières, par exemple au moyen d'une charnière, de chaînons, d'anneaux etc.... La figure 1 illustre plus particulièrement la structure de cuisson, en position semi-ouverte.

On pourra prévoir un système de fermeture des deux grilles 1 et 2 - par exemple au moyen d'anneaux permettant d'assurer un blocage satisfaisant des deux grilles et éviter la chute des aliments dans la braise lors de la manipulation de la structure de cuisson. Un homme du métier pourra clairement adapter tout autre système de fermeture et de blocage.

Chacune des deux barres ou plaques latérales 10 et 20 comporte un tenon 11 (resp. 21) ainsi qu'un point d'articulation 12 (resp. 22). Le tenon 11 (resp. 21) est destiné à venir coulisser dans une glissière 13 (resp. 23) d'un cadre rigide 100 représenté dans la figure 2 de manière à guider la structure composée par les deux grilles 1 et 2 et maintenir les extrémités des barres 10 et 20 dans le plan du cadre rigide 100.

Le point d'articulation 12 (resp. 22) est destiné à recevoir l'extrémité d'un bras 13 (resp. 23) qui peut également tourner via son autre extrémité autour d'un pivot fixe 14 (resp. 24) situé à une extrémité de la glissière 13 (resp. 23).

On constate que lorsque l'on retourne la structure de grille de la figure 1, les points d'articulations 12 et 22 restent dans une même circonférence par rapport aux pivots fixes 14 et 24 et, de surcroît, les extrémités des barres ou plaques 10 et 20 restent dans le plan défini par les glissières 13 et 23.

On constate ainsi que l'on assure un parfait guidage de la structure de grille, formée par les deux éléments 1 et 2, lorsqu'on la retourne par rapport au cadre de la figure 2.

Dans un mode de réalisation particulier, le cadre est fixé sur quatre pieds-réglables ou non, de manière à assurer une distance appropriée par rapport au foyer de braise. Braises ou tout autre élément de chauffe : gaz, salamandre électrique, pierres de lave, infrarouge, corps de chauffe, etc....

On constate ainsi que l'on dispose d'un appareil de cuisson facile à manoeuvrer, sans risque de brûlure pour l'utilisateur, et évitant la chute des aliments dans la braise.

Le cadre rigide 100 comportant les deux glissières 13 et 23 peut prendre des formes de réalisations bien diverses.

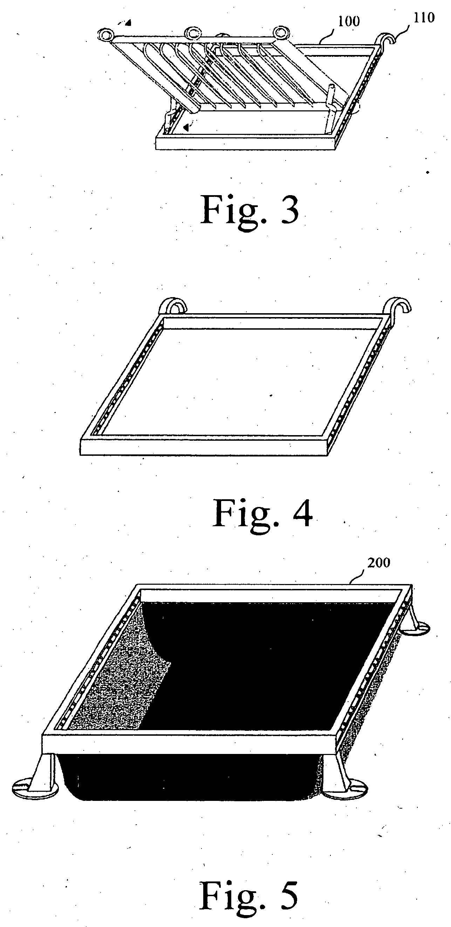

Dans un premier mode de réalisation, illustré dans la figure 3, le cadre rigide 100 peut être conçu de manière facilement démontable par rapport à un corps de foyer 200 illustré dans la figure 5. La figure 4 illustre une réalisation dans laquelle on peut facilement démonter la structure de cuisson réversible formée par les deux grilles 1 et 2, de manière à faciliter le nettoyage de l'ensemble.

Un homme du métier pourra même adapter le cadre rigide 100 de manière à permettre la pose sur une structure de barbecue ou de grill pré-existante. L'invention prend alors la forme d'un « kit « de grill composé d'une structure de grill réversible dans un cadre 100 facilement démontable.

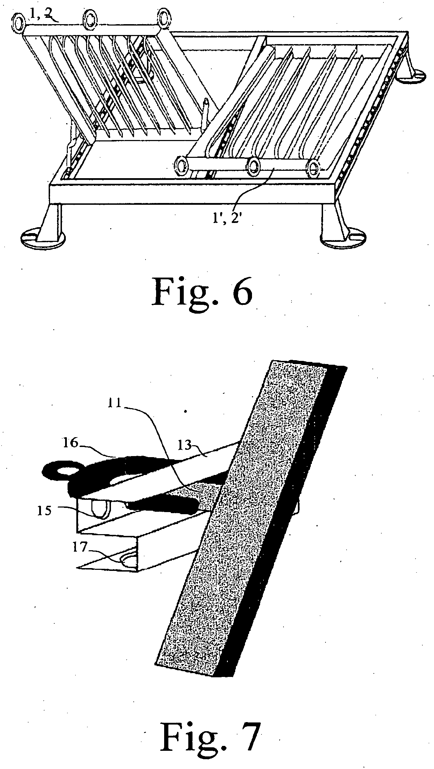

La figure 6 illustre une variante d'exécution de la présente invention, comportant deux structures de grilles 1,2 et 1', 2' semblables à la structure décrite précédemment en référence à la figure 1. Les deux structures sont réversibles indépendamment l'une de l'autre.

La figure 7 illustre un mode de réalisation spécifique de l'invention dans lequel on a prévu une série d'orifices 15 sur le fond de la glissière 13 destinés à recevoir une clé de blocage 16, ayant la forme d'un « U » dont chaque extrémité peut venir s'engager dans un des orifices 15 et venir bloquer le déplacement longitudinal du tenon 11 et, par conséquent, le maintien du grill dans une position prédéterminée.

Comme on le voit dans le schéma de la figure 7, la glissière 13 du cadre rigide pourra présenter un profil en « S » permettant de disposer une seconde série d'orifice 17 permettant une fixation réglable, des pieds 110 au moyen d'un about 18 destinée à s'emboîter dans l'un des orifices 17.

L'appareil de cuisson devient par conséquent parfaitement amovible et, de manière avantageuse, peut être facilement adapté à toute structure préexistante.

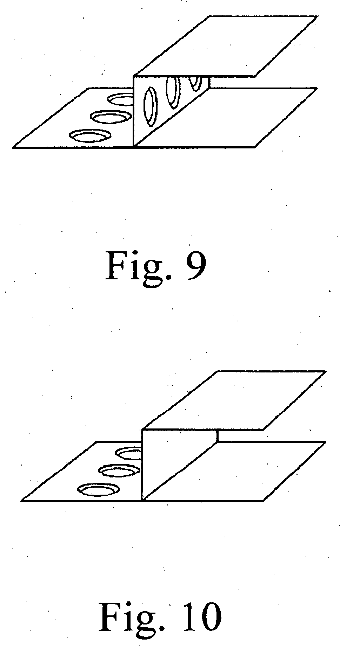

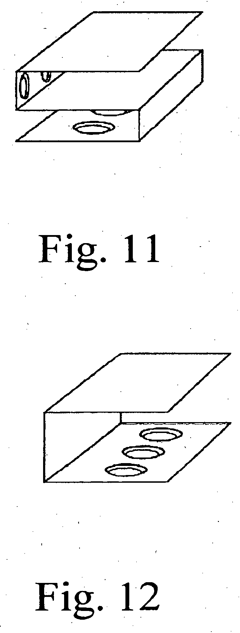

Les figures 9, 10, 11 et 12 présentent deux autres profils envisageables pour réaliser la glissière 13, à savoir en « S » , « U » et en « H ».

## Revendications

1. Dispositif de cuisson de type grill comportant :
- un cadre (100) comportant deux glissières (13, 23) latérales
- une structure de grill comportant une première et une seconde grilles (1,2) articulées entre elles de manière à constituer un compartiment de cuisson, ladite structure comportant deux barres ou plaques latérales comportant chacune :
- un tenon (11, 21) destiné à venir coulisser dans l'une des deux glissières ;
- un point d'articulation (12, 22) recevant l'extrémité d'un bras (13, 23) pouvant tourner autour d'un pivot fixe (14, 24) situé à une extrémité de la glissière (13, 23).
**caractérisé en ce que** lesdits tenons (11, 21) coulissent dans leurs glissières (13, 23) de manière à guider la structure composée par lesdites premières et secondes grilles (1, 2) et maintenir les extrémités des barres (10, 20) dans le plan du cadre rigide (100).

2. Dispositif de cuisson selon la revendication 1 **caractérisé en ce que** lesdites première et seconde grilles sont articulées au moyen d'un chaînon, d'un anneau ou d'une charnière.

3. Dispositif de cuisson selon la revendication 1 ou 2 **caractérisé en ce qu'**il comporte un système de fermeture (3) pour lesdites première et seconde grilles (1, 2).

4. Dispositif de cuisson selon l'une des revendications précédentes **caractérisé en ce que** le cadre est doté de pieds réglables en hauteur.

5. Dispositif de cuisson selon l'une des revendications précédentes **caractérisé en ce que** le cadre est démontable par rapport à un corps recevant le foyer de cuisson.

6. Dispositif de cuisson selon l'une des revendications précédentes **caractérisé en ce qu'**il comporte des éléments de fixation à une structure de barbecue ou de grill préexistante.

7. Dispositif de cuisson selon l'une des revendications indépendantes **caractérisé en ce qu'**il comporte deux structures de grilles (1,2, 1', 2') identiques et réversibles indépendamment l'une de l'autre.

8. Dispositif de cuisson selon l'une quelconque des revendications précédentes **caractérisé en ce qu'**il comporte une série d'orifices (15) sur le fond d'une des glissières (13, 23) destinés à recevoir une clé de blocage (16) permettant de bloquer le déplacement longitudinal dudit tenon (11).

9. Dispositif de cuisson selon l'une quelconque des revendications précédentes **caractérisé en ce que** ladite glissière (13, 23) présentent un profil en « S » comportant une seconde série d'orifices (17) permettant une fixation réglable du cadre (100).

10. Dispositif de cuisson selon l'une quelconque des revendications 1 à 9 **caractérisé en ce que** l'une des glissières (13, 23) présente un profil en « S », « U » et en « H

## Patentansprüche

1. Grillgerät mit folgenden Bestandteilen:
- einem Rahmen (100) mit zwei seitlichen Schienen (13, 23)
- einer Grillstruktur mit einem ersten und einem zweiten Gitter (1, 2), die derart miteinander verbunden sind, dass sie über eine Bratkammer bilden,
wobei die obengenannte Struktur zwei Seitenstangen oder -platten umfasst, die jeweils über folgendes verfügen:
- einen Zapfen (11, 21), der in einer den beiden Schienen gleitet;
- einen Gelenkpunkt (12, 22), der das Ende eines Arms (13, 23) aufnimmt, der um ein festes Drehgelenk (14, 24) drehen kann, das sich an einem Ende der Schiene (13, 23) befindet,
**gekennzeichnet dadurch, dass** die Zapfen (11, 21) in ihren Schienen (13, 23) gleiten, um die aus dem ersten und dem zweiten Gittern (1, 2) bestehende Struktur zu führen und die Enden der Stangen (10, 20) in der Ebene des starren Rahmens (100) zu halten.

2. Grillgerät nach Anspruch 1, **gekennzeichnet dadurch, dass** das obengenannte erste und das zweite Gitter an einem Kettenglied, einem Ring oder einem Scharnier aufgehängt sind.

3. Grillgerät nach Anspruch 1 oder 2, **gekennzeichnet durch** ein Verschlusssystem (3) für das obengenannte erste und das zweite Gitter (1, 2).

4. Grillgerät nach einem der vorhergehenden Ansprüche, **gekennzeichnet dadurch, dass** der Rahmen mit höhenverstellbaren Füßen ausgestattet ist.

5. Grillgerät nach einem der vorhergehenden Ansprüche, **gekennzeichnet dadurch, dass** der Rahmen von einem Körper, der die Kochstelle aufnimmt, abmontierbar ist.

6. Grillgerät nach einem der vorhergehenden Ansprüche, **gekennzeichnet durch** Elemente zur Befestigung an einem bereits existierenden Bratrost oder Grill.

7. Grillgerät nach einem der unabhängigen Ansprüche, **gekennzeichnet durch** zwei Strukturen von Gittern (1, 2 1', 2'), die identisch und unabhängig voneinander reversibel sind.

8. Grillgerät nach einem beliebigen der vorherigen Ansprüche, **gekennzeichnet durch** eine Reihe von Öffnungen (15) auf dem Boden einer der Schienen (13, 23), die dazu gedacht sind, um einen Blockierungsschlüssel (16) aufzunehmen, wodurch es möglich wird, die Längsbewegung des genannten Zapfens (11) zu blockieren.

9. Grillgerät nach einem beliebigen der vorherigen Ansprüche, **gekennzeichnet dadurch, dass** die obengenannte Schiene (13, 23) ein "S"-Profil mit einer zweiten Reihe von Öffnungen (17) aufweist, wodurch eine regulierbare Befestigung des Rahmens (100) möglich ist.

10. Grillgerät nach einem beliebigen der Ansprüche 1 bis 9, **gekennzeichnet dadurch, dass** eine der Schienen (13, 23) ein "S"-, "U"- oder "H"-Profil aufweist.#

## Claims

1. Barbecue type cooking device comprising:
- a frame (100) having two side slides (13, 23)
- a grill arrangement comprising a first and a second grills (1,2) hinged together so as to form a cooking compartment, said structure comprising two bars or side plates each comprising:
- a pin (11, 21) designed to slide in one of the two slides;
- a pivot point (12, 22) receiving the end of an arm (13, 23) rotatable about a fixed pivot (14, 24) located at one end of the slide (13, 23)
**characterized in that** said pins (11, 21) slides within their slides (13, 23) so as to guide the structure comprised by said first and second grills (1, 2) and fix the ends of bars (10, 20) within the plane of the rigid frame (100).

2. A cooking device according to claim 1 **characterized in that** said first and second grills are articulated by means of a link, a ring or a hinge.

3. A cooking device according to claim 1 or 2 **characterized in that** it comprises a closure system (3) for said first and second grill (1, 2).

4. A cooking device according to one of the preceding claims **characterized in that** the frame is provided with adjustable feets.

5. A cooking device according to one of the preceding claims **characterized in that** the frame is removable with respect to a body accommodating the heating plate.

6. A cooking device according to one of the preceding claims **characterized in that** it comprises fastening elements for a barbecue grill or pre-existing structure.

7. A cooking device according to one of the independent claims **characterized in that** it comprises two identical grill structures (1,2, 1', 2') being reversible independently of one another.

8. A cooking device according to any of the preceding claims **characterized in that** it comprises a series of orifices (15) on the bottom of one of the slides (13, 23) for receiving a locking key (16) to block the longitudinal movement of said pin (11).

9. A cooking device according to any preceding claim **characterized in that** said slide (13, 23) has a S-shaped profile having a second series of orifices (17) for an adjustable fixing of the frame (100).

10. A cooking device according to any one of claims 1 to 9 **characterized in that** one of the slides (13, 23) has an S-profile, a U-profile and a H-profile
